# EUROPÄISCHE PATENTSCHRIFT

(11) **EP 3 184 579 B1**
(45) Veröffentlichungstag und Bekanntmachung des Hinweises auf die Patenterteilung: **13.11.2019**
(21) Anmeldenummer: 16202803.9
(22) Anmeldetag: 08.12.2016
(51) Int. Cl.: C08J 3/20, C08J 3/205, C08G 77/32, C08G 77/34

(54) **VERFAHREN ZUR HERSTELLUNG VON ORGANOPOLYSILOXANZUSAMMENSETZUNGEN**
PROCESS FOR PRODUCING ORGANOPOLYSILOXANE COMPOSITIONS
PROCÉDÉ DE FABRICATION DE COMPOSITIONS D'ORGANOSILANES

(30) Priorität: 21.12.2015 DE 102015226241
(43) Veröffentlichungstag der Anmeldung: 28.06.2017
(73) Patentinhaber: Wacker Chemie AG, 81737 München (DE)
(72) Erfinder: Fürst, Josef, 84561 Mehring (DE); von Bein, Sabrina, 84547 Emmerting (DE); Dietl, Stefan, 84489 Burghausen (DE); Hiltl, Norbert, 84561 Mehring (DE); Fuchs, Werner, 84387 Julbach (DE)
(74) Vertreter: Budczinski, Angelika

(56) Entgegenhaltungen:
- EP-A1- 2 206 737
- WO-A2-01/46299

## Beschreibung

Die Erfindung betrifft Verfahren zur Herstellung von Füllstoff enthaltenden Organopolysiloxanzusammensetzungen unter Zusatz von Wasser als Prozesshilfsmittel.

Verfahren zur Herstellung von Füllstoff enthaltenden Organopolysiloxanzusammensetzungen sind bereits bekannt. So beschreibt EP 570387 A beispielsweise ein Verfahren zur kontinuierlichen Herstellung von HTV-Siliconmassen, bei dem die Füllstoffeinarbeitung in das Polysiloxan und die Entgasung in einem Schritt in einem oszillierenden Einwellenpilgerschrittkneter erfolgt. Es ist allerdings eine Trennung der Maschine möglich, so dass im ersten Kneter der Mischvorgang und im zweiten Kneter der Entgasungsvorgang stattfinden kann. Des Weiteren wird in EP 2295222 A3 (General Electric)ein Verfahren zur Herstellung von heißvulkanisierenden Organopolysiloxanmassen in einem Extruder mit spezieller Geometrie beschrieben. WO01/46299 beschreibt auch ein ähnliches Verfahren, wobei der Füllstoff am Anfang zugegeben wird.

Gegenstand der Erfindung ist ein Verfahren zur kontinuierlichen Herstellung von Organopolysiloxanzusammensetzungen (A), bei dem Organopolysiloxane (O), Verarbeitungshilfsmittel (S) und Füllstoffe (F) in Anwesenheit von Wasser (W) zu Rohmischungen vermischt und geknetet werden, wobei die Zugabe von Wasser (W) zu Organopolysiloxan (O), Verarbeitungshilfsmittel (S) sowie gegebenenfalls Additiven (Z) vor dem Vermischen mit Füllstoff (F) erfolgt, mit der Maßgabe, dass Wasser (W) in den kontinuierlichen Polymerstrom, enthaltend Komponente (O), Komponente (S) und gegebenenfalls Komponente (Z), dosiert wird, sowie anschließend die Rohmischungen in einem Ausheiz- und Entgasungsschritt bei Temperaturen im Bereich von 100°C bis 250°C entgast und von Wasser (W) befreit werden, wobei es sich bei den Organopolysiloxanen (O) um solche enthaltend Einheiten der Formel

R¹ₐR²_{b}R³_{g}SiO_{(4-a-b-g)/2} (1)

handelt, wobei
- R¹: gleich oder verschieden sein kann und einwertige, SiC-gebundene, gegebenenfalls halogen- oder cyanosubstituierte, aliphatische Kohlenstoff-Kohlenstoff-Mehrfachbindung aufweisende Kohlenwasserstoffreste darstellt,
- R²: gleich oder verschieden sein kann und einwertige, SiC-gebundene, gegebenenfalls halogen- oder cyanosubstituierte, von aliphatischen Kohlenstoff-Kohlenstoff-Mehrfachbindungen freie Kohlenwasserstoffreste darstellt,
- R³: gleiche oder verschiedene einwertige Si-gebundene Reste darstellen, ausgewählt aus -H, -OH und -OR, wobei R ein einwertiger Kohlenwasserstoffrest ist, der durch Sauerstoffatome unterbrochen sein kann,
- a: 0, 1, 2 oder 3 ist,
- b: 0, 1, 2 oder 3 ist und
- g: 0, 1, 2 oder 3 ist,
mit der Maßgabe, dass die Summe a+b+g kleiner als oder gleich 3 ist und Siloxane (O) mindestens 30 Einheiten der Formel (1) aufweisen, mit der Maßgabe, dass als Mischaggregate Doppelmuldenkneter mit Austragsschnecke oder oszillierende Einwellenpilgerschrittkneter, jeweils gegebenenfalls mit vorgeschalteter Kneterkaskade, verwendet werden.

Der Füllstoffgehalt der erfindungsgemäß hergestellten Organopolysiloxanzusammensetzungen (A) liegt vorzugsweise bei 5 bis 80 Gew.-%, bevorzugt bei 10 bis 50 Gew.-%, besonders bevorzugt bei 20 bis 40 Gew.-%.

Als Füllstoffe (F) kommen sämtliche üblicherweise in Siliconmassen eingesetzte Füllstoffe in Frage, wobei auch Mischungen von verschiedenen Füllstoffen eingesetzt werden können. Geeignete Füllstoffe (F) sind beispielsweise Kieselsäuren, Quarzmehle, Ruße, Metalloxide, Metallcarbonate, Metallsulfate, Metallsilicate, Metallnitride, Diatomeenerde, Tone, Kreiden, Glimmer, Metallpulver, Aktivkohle, Pulver organischer Kunststoffe sowie auch Siliconharze. Wichtig ist, dass die Viskosität der füllstoffhaltigen Organopolysiloxanzusammensetzungen (A) aufgrund des Füllstoffgehaltes deutlich höher ist als die Viskosität des Organopolysiloxans (O), welches in diese füllstoffhaltige Siliconmasse eingemischt werden soll.

Bevorzugt handelt es sich bei den erfindungsgemäß eingesetzten Füllstoffen (F) um verstärkende Füllstoffe, also Füllstoffe mit einer spezifischen Oberfläche nach BET von mindestens 50 m²/g, vorzugsweise von 50 bis 500 m²/g, wie z.B. unter Erhalt der Struktur entwässerte Kieselsäurehydrogele, also sog. Aerogele, Ruße sowie pyrogen erzeugte Kieselsäuren, die gegebenenfalls nach bekannten Verfahren, wie beispielsweise mit 1,1,1,3,3,3-Hexamethyldisilazan (HMN) oder 1,1,3,3-Tetramethyl-1,3-divinyldisilazan(VMN), oberflächenbehandelt sein können, um z.B. deren Dispergierbarkeit zu verbessern.

Besonders bevorzugt handelt es sich bei den erfindungsgemäß eingesetzten Füllstoffen (F) um pyrogen erzeugte Kieselsäuren mit einer BET-Oberfläche im Bereich von bevorzugt 50 bis 500 m²/g, besonders bevorzugt von 100 bis 450 m²/g. Diese besonders bevorzugt eingesetzte pyrogen erzeugte Kieselsäure verfügt über eine hydrophile Oberfläche.

Falls es sich bei den erfindungsgemäß eingesetzten Füllstoffen (F) um Organopolysiloxanharze handelt, sind bei Raumtemperatur und einem Druck von 1013 hPa feste, pulverförmige Harze bevorzugt, bei denen mehr als 50 % der Siloxan-Einheiten T- und/oder Q-Einheiten darstellen.

Bei dem erfindungsgemäßen Verfahren können als Füllstoffe (F) auch Gemische von hydrophilen und hydrophobierten oxidischen verstärkenden Füllstoffen eingesetzt werden.

Bei den der Organopolysiloxanzusammensetzung (A) zugrunde liegenden Organopolysiloxane (O) kann es sich um eines oder um eine Mischung unterschiedlicher Organopolysiloxane (O) handeln. Im Grunde können sämtliche, dem Fachmann bei der Herstellung von HTV-, LSR-, RTV-1 und RTV-2-Massen wohl bekannten, hinlänglich beschriebenen Organopolysiloxane (O) eingesetzt werden. Hierzu zählen lineare, verzweigte, cyclische oder harzartige Organopolysiloxane, die gegebenenfalls, meist zum Zwecke der Vernetzbarkeit, funktionelle Gruppen enthalten können.

Bei den erfindungsgemäß eingesetzten Organopolysiloxanen (O) handelt es sich um solche enthaltend Einheiten der Formel

R¹ₐR²_{b}R³_{g}SiO_{(4-a-b-g)/2} (1),

wobei
- R¹: gleich oder verschieden sein kann und einwertige, SiC-gebundene, gegebenenfalls halogen- oder cyanosubstituierte, aliphatische Kohlenstoff-Kohlenstoff-Mehrfachbindung aufweisende Kohlenwasserstoffreste darstellt,
- R²: gleich oder verschieden sein kann und einwertige, SiC-gebundene, gegebenenfalls halogen- oder cyanosubstituierte, von aliphatischen Kohlenstoff-Kohlenstoff-Mehrfachbindungen freie Kohlenwasserstoffreste darstellt,
- R³: gleiche oder verschiedene einwertige Si-gebundene Reste darstellt, ausgewählt aus -H, -OH und -OR, wobei R ein einwertiger Kohlenwasserstoffrest ist, der durch Sauerstoffatome unterbrochen sein kann,
- a: 0, 1, 2 oder 3, bevorzugt 0 oder 1, ist,
- b: 0, 1, 2 oder 3, bevorzugt 1, 2 oder 3, ist und
- g: 0, 1, 2 oder 3, bevorzugt 0 oder 1, insbesondere 0, ist,
mit der Maßgabe, dass die Summe a+b+g kleiner als oder gleich 3 ist und Siloxane (O) mindestens 30, bevorzugt mindestens 100, besonders bevorzugt 100 bis 20 000, insbesondere 4 000 bis 10 000, Einheiten der Formel (1) aufweisen.

Bevorzugt handelt es sich bei den Organopolysiloxanen (O) um solche, bei denen in mindestens 50 %, besonders bevorzugt in mindestens 80%, der Einheiten der Formel (1) die Summe (a+b+g) gleich 2 ist.

Bei Rest R¹ handelt es sich vorzugsweise um aliphatische Kohlenstoff-Kohlenstoff-Mehrfachbindung aufweisende Kohlenwasserstoffreste mit 2 bis 10 Kohlenstoffatomen, wie z.B. Vinyl-, Allyl-, Methallyl-, 1-Propenyl-, 5-Hexenyl-, Ethinyl-, Butadienyl-, Hexadienyl-, Cyclopentenyl-, Cyclopentadienyl- und Cyclohexenylreste. Besonders bevorzugt handelt es sich bei R¹ um Vinyl- oder Allylreste, insbesondere um den Vinylrest.

Die Reste R¹ können in jeder Position der Polymerkette, insbesondere an den endständigen Siliciumatomen, gebunden sein.

Rest R² weist vorzugsweise 1 bis 10 Kohlenstoffatome auf. Besonders bevorzugt sind als Rest R² der Methyl- oder Phenylrest.

Bevorzugt handelt es sich bei R³ um Oxyalkylenreste.

Die Struktur der Polyorganosiloxane (O) enthaltend Einheiten der Formel (1) kann linear, cyclisch oder auch verzweigt sein.

Bevorzugt handelt es sich bei den Siloxanen (O) um solche bestehend aus Einheiten der Formel (1).

Bei den erfindungsgemäß eingesetzten Organopolysiloxanen (O) handelt es sich insbesondere um solche der Formel

(ViMe₂SiO_{1/2})_{c}(ViMeSiO)_{d}(Me₂SiO)ₑ(Me₃SiO_{1/2})_{f} (2),

wobei Vi Vinylrest und Me Methylrest bedeuten sowie die Indizes c, d, e und f **0** oder ganzen Zahlen darstellen mit der Maßgabe, dass die Summe c+d+e+f im Bereich von 100 bis 20 000, bevorzugt 4 000 bis 10 000, liegt.

Beispiele für Siloxane der Formel (2) sind reine Methylsiloxane sowie Methyl-/Vinyl-Siloxane, wobei bei letzteren c, d, e und f bevorzugt folgende Relationen erfüllen: c+d ≥ 1, c+f = 2, 100 <(d+e)< 20 000, vorzugsweise 4 000<(d+e)<10 000, und 0<(d+1)/(d+e)<1, vorzugsweise 0<(d+1)/(d+e)<0,1.

Die erfindungsgemäß eingesetzten linearen Siloxane der Formel (2) können - wenngleich in Formel (2) nicht dargestellt - herstellungsbedingt einen molaren Anteil von Verzweigungen, d.h. T- und/oder Q-Einheiten, von bevorzugt bis zu 1%, besonders bevorzugt bis zu 1000 ppm, insbesondere bis zu 100 ppm, aufweisen.

Bei dem erfindungsgemäß eingesetzten Wasser (W) kann es sich um natürliche Wässer, wie z.B. Regenwasser, Grundwasser, Quellwasser und Flusswasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer, handeln.

Bevorzugt wird als Wasser (W) voll entsalztes Wasser eingesetzt.

Das erfindungsgemäß eingesetzte Wasser (W) hat eine Leitfähigkeit von bevorzugt < 100 µS/cm, besonders bevorzugt < 10µS, jeweils gemessen bei 25°C und 1013 hPa mittels einer konduktometrischen Leitfähigkeitsmesselektrode (z.B. Elektrode LR325/01 von WTW, EN 27888:1993).

Bei dem erfindungsgemäß eingesetzten Verarbeitungshilfsmittel (S) handelt es sich bevorzugt um Organopolysiloxane mit 2 bis 25 Siloxaneinheiten, bei denen die Reste bevorzugt ausgewählt sind aus Methyl-, Phenyl-, Vinyl- und Hydroxylgruppen.

Im Rahmen der vorliegenden Erfindung sollen von dem Begriff Organopolysiloxane sowohl polymere, oligomere wie auch dimere Siloxane mitumfasst werden.

Beispiele für Siloxane (S) sind trimethylsilyl-endständige Polydimethylsiloxane sowie dimethylhydroxysilyl-endständige Polydimethylsiloxane.

Besonders bevorzugt handelt es sich bei Komponente (S) um im Wesentlichen lineare silanolhaltige Organopolysiloxane mit 2 bis 25 Siloxaneinheiten.

Die erfindungsgemäß eingesetzten, im Wesentlichen linearen Siloxane (S) können herstellungsbedingt einen molaren Anteil von Verzweigungen, d.h. T- und/oder Q-Einheiten, von bevorzugt bis zu 1%, besonders bevorzugt bis zu 1000 ppm, aufweisen.

Im erfindungsgemäßen Verfahren werden Verarbeitungshilfsmittel (S) in Mengen von bevorzugt 0 bis 40 Gewichtsteile, besonders bevorzugt 2 bis 30 Gewichtsteile, jeweils bezogen auf 100 Gewichtsteile Siloxane (O), eingesetzt.

Bei dem erfindungsgemäßen Verfahren können zusätzlich zu den Siloxanen (O), Füllstoffen (F), Verarbeitungshilfsmittel (S) und Wasser (W) weitere Komponenten eingesetzt werden, wie z.B. Additive (Z).

Bei den Additiven (Z) kann es sich um alle Additive handeln, die auch bisher zur Herstellung von Organopolysiloxanmassen eingesetzt worden sind.

Bevorzugt handelt es sich bei den Additiven (Z) um Dispergierhilfsmittel, Hitzestabilisatoren, wie z.B. Salze seltener Erden, und die Rheologie beeinflussende Zusätze.

Falls im erfindungsgemäßen Verfahren Additive (Z) eingesetzt werden, handelt es sich um Mengen von bevorzugt 0,01 bis 5 Gewichtsteile, besonders bevorzugt 0,01 bis 2 Gewichtsteile, jeweils bezogen auf 100 Gewichtsteile Siloxane (O).

Bevorzugt werden bei dem erfindungsgemäßen Verfahren außer den Komponenten (O), (F), (W), (S) und gegebenenfalls (Z) keine weiteren Komponenten eingesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungegemäße Verfahren kann kontinuierlich, diskontinuierlich oder semikontinuierlich durchgeführt werden, wobei die kontinuierliche Verfahrensweise bevorzugt ist.

Die Zugabe von Wasser (W) kann bei der vorliegenden Offenbarung auf unterschiedliche Weise erfolgen, bevorzugt
i) durch Zugabe von Wasser zu Organopolysiloxan (O), Verarbeitungshilfsmittel (S) sowie gegebenenfalls Additiven (Z) vor dem Vermischen mit Füllstoff (F) und/oder
ii) durch Vermischen von Füllstoff (F) mit Wasser (W) vor dem Vermischen mit Organopolysiloxan (O), bevorzugt durch Befeuchten der Füllstoffe (F).

Die Wasserzugabe gemäß Verfahrensvariante i) kann durch einfaches Vermischen der Komponenten erfolgen.

Die Wasserzugabe gemäß Verfahrensvariante ii) kann durch einfaches Vermischen von Füllstoff (F) und Wasser (W) erfolgen. Dabei kann Wasser (W) flüssig eingesetzt werden oder als Wasserdampf, z.B. durch Einleiten von Wasserdampf in den Aufgabetrichter der Füllstoffdosierung zur Kneterkaskade. Dadurch werden die Füllstoffpartikel (F) befeuchtet, was dann zu einer Verbesserung der Aufnahme von Füllstoff (F) im Polymer (O) führt.

Bei dem erfindungsgemäßen Verfahren wird Wasser (W) in Mengen von bevorzugt 0,1 bis 20 Gew.-%, besonders bevorzugt 0,1 bis 2 Gew.-%, insbesondere 0,3 bis 0,8 Gew.- %, ganz besonders bevorzugt 0,4 bis 0,6 Gew.-%, jeweils bezogen auf das Gesamtgewicht an Füllstoff (F), eingesetzt.

Bei der diskontinuierlichen Verfahrensweise erfolgt die Zugabe von Wasser (W) bevorzugt nach Variante i).

Bei der diskontinuierlichen Verfahrensweise kann die der vorliegende Offenbarung in beliebigen und bisher bekannten Mischern durchgeführt werden, bevorzugt in Doppelmuldenknetern mit Austragsschnecke oder in Kippknetern.

Bei der kontinuierlichen Verfahrensweise erfolgt die Zugabe von Wasser (W) nach Variante i). Beim erfindungsgemäßen Verfahren wird Wasser (W) in den kontinuierlichen Polymerstrom, enthaltend die Komponente (O), (S) und gegebenenfalls (Z), dosiert und dieses Gemisch vor der Zugabe von Füllstoff (F) intensiv vermischt, bevorzugt in einer separaten Knetkammer.

Bei der kontinuierlichen Verfahrensweise können alle Mischaggregate, die auch bisher zur kontinuierlichen Herstellung von Organopolysiloxanmassen eingesetzt worden sind, verwendet werden, bevorzugt Doppelmuldenkneter mit Austragsschnecke oder oszillierende Einwellenpilgerschrittkneter, jeweils gegebenenfalls mit vorgeschalteter Kneterkaskade.

Bei dem erfindungsgemäßen Verfahren handelt es sich bevorzugt um ein kontinuierliches mehrstufiges Verfahren.

Bevorzugt werden bei dem erfindungsgemäßen kontinuierlichen Verfahren Organopolysiloxane (O), Füllstoffe (F), Verarbeitungshilfsmittel (S) und gegebenenfalls weitere Komponenten in Anwesenheit von Wasser (W) in einem oszillierenden Einwellenpilgerschrittkneter in einer ersten Stufe intensiv vermischt und geknetet und diese Rohmischung in einer zweiten Verfahrensstufe bei Temperaturen im Bereich von 100°C bis 250°C entgast und von Wasser (W) befreit.

Bevorzugt werden bei dem erfindungsgemäßen kontinuierlichen Verfahren Organopolysiloxane (O), Füllstoffe (F), Verarbeitungshilfsmittel (S) und gegebenenfalls weitere Komponenten in Anwesenheit von Wasser (W) in einer ersten Stufe in einer Knetkaskade mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweist, zu Rohmischungen vermischt und geknetet. Diese Rohmischungen werden in einer zweiten Verfahrensstufe bevorzugt in einem kontinuierlichen oszillierenden Einwellenpilgerschrittkneter oder besonders bevorzugt in einem kontinuierlich betriebenen Doppelmuldenkneter mit Austragsschnecke bei Temperaturen im Bereich von 100°C bis 250°C entgast und von Wasser (W) befreit.

In einer bevorzugten Ausführungsform des erfindungsgemäßen Verfahrens werden kontinuierlich zum Massestrom von Organopolysiloxanen (O) Verarbeitungshilfsmittel (S), gegebenenfalls weitere Komponenten sowie Wasser (W) zudosiert, der so erhaltene Massestrom wird in der ersten Kammer einer Knetkaskade intensiv durchmischt und anschließend in den folgenden Kammern Füllstoffe (F) in einer ersten Verfahrensstufe eingemischt und geknetet, wobei die erste Knetkammer eine Beschickungsöffnung und die letzte Knetkammer eine Austragsöffnung aufweist, sowie die erhaltene Rohmischung in einer zweiten Verfahrensstufe kontinuierlich in einem oszillierenden Einwellenpilgerschrittkneter bei Temperaturen im Bereich von 100°C bis 250°C entgast und von Wasser (W) befreit.

In einer weiteren Ausführungsform der vorliegenden Offenbarung werden kontinuierlich zum Massestrom von Organopolysiloxanen (O) Verarbeitungshilfsmittel (S) und gegebenenfalls weitere Komponenten zudosiert, der so erhaltene Massestrom wird in der ersten Kammer einer Knetkaskade intensiv durchmischt und anschließend Füllstoffe (F) im Gemisch mit Wasser (W) in einer ersten Verfahrensstufe eingemischt und geknetet, wobei die erste Knetkammer eine Beschickungsöffnung und die letzte Knetkammer eine Austragsöffnung aufweist, sowie die erhaltene Rohmischung in einer zweiten Verfahrensstufe in einem kontinuierlichen oszillierenden Einwellenpilgerschrittkneter bei Temperaturen im Bereich von 100°C bis 250°C entgast und von Wasser (W) befreit.

In einer bevorzugten Ausführungsform des erfindungsgemäßen Verfahrens werden kontinuierlich zum Massestrom von Organopolysiloxanen (O) Verarbeitungshilfsmittel (S), gegebenenfalls weitere Komponenten sowie Wasser (W) zudosiert, der so erhaltene Massestrom wird in der ersten Kammer einer Knetkaskade intensiv durchmischt und anschließend in den folgenden Kammern Füllstoffe (F) in einer ersten Verfahrensstufe eingemischt und geknetet, wobei die erste Knetkammer eine Beschickungsöffnung und die letzte Knetkammer eine Austragsöffnung aufweist, sowie die erhaltene Rohmischung in einer zweiten Verfahrensstufe in einem kontinuierlich betriebenen Doppelmuldenkneter mit Austragsschnecke bei Temperaturen im Bereich von 100°C bis 250°C entgast und von Wasser (W) befreit.

In einer weiteren Ausführungsform der vorliegenden Offenbarung werden kontinuierlich zum Massestrom von Organopolysiloxanen (O) Verarbeitungshilfsmittel (S) und gegebenenfalls weitere Komponenten zudosiert, der so erhaltene Massestrom wird in der ersten Kammer einer Knetkaskade intensiv durchmischt und anschließend Füllstoffe (F) im Gemisch mit Wasser (W) in einer ersten Verfahrensstufe eingemischt und geknetet, wobei die erste Knetkammer eine Beschickungsöffnung und die letzte Knetkammer eine Austragsöffnung aufweist, sowie die erhaltene Rohmischung in einer zweiten Verfahrensstufe in einem kontinuierlich betriebenen Doppelmuldenkneter mit Austragsschnecke bei Temperaturen im Bereich von 100°C bis 250°C entgast und von Wasser (W) befreit.

In der diskontinuierlichen Ausführung der vorliegenden Offenbarung werden Organopolysiloxane (O), Verarbeitungshilfsmittel (S) und Wasser in einem Batchkneter, z.B. Doppelmuldenkneter mit Austragschnecke oder einem Kippkneter vorgelegt und gemischt, die Füllstoffe (F) werden dann portionsweise zugegeben bis die gesamte Menge an Füllstoffen eingearbeitet ist, daraufhin wird die entstandene Rohmischung noch 2 h bei 150°C ausgeheizt entgast und von Wasser (W) befreit.

Das erfindungsgemnäße Verfahren wird bevorzugt unter Inertgasatmosphäre, wie z.B. Stickstoff oder Argon, bevorzugt Stickstoff, durchgeführt.

Beim erfindungsgemnäßen Verfahren beträgt der Sauerstoffgehalt in den Mischaggregaten bevorzugt weniger als 5,0 Vol.-%.

Falls bei der vorliegenden Offenbarung Vormischungen aus den eingesetzten Komponenten separat hergestellt werden, wie etwa Mischungen aus Organopolysiloxanen (O), Verarbeitungshilfsmittel (S), gegebenenfalls weiteren Komponenten und gegbenenfalls Wasser (W) oder Mischungen aus Füllstoffen (F) und Wasser (W), so kann dies bei beliebigen Bedingungen durchgeführt werden, die ein möglichst gleichmäßiges Vermischen zulassen, bevorzugt bei Temperaturen von 20 bis 90°C und Umgebungsdruck, bevorzugt von 1013 mPa.

Der erste Schritt des erfindungsgemäßen Verfahrens wird bevorzugt bei Temperaturen von 45 bis 230°C durchgeführt.

Der zweite Schritt des erfindungsgemäßen Verfahrens wird bevorzugt bei Temperaturen von 100 bis 230°C durchgeführt.

Das erfindungsgemäße Verfahren kann beim Druck der umgebenden Atmosphäre, also 900 bis 1100 hPa, oder bei niedrigeren Drücken, wie z.B. Drücken kleiner als 900 hPa, ausgeführt werden.

Falls das erfindungsgemäße Verfahren beim Druck der umgebenden Atmosphäre durchgeführt wird, erfolgt dies bevorzugt unter Inertgas, wie z.B. Stickstoff, Argon. Das Inertgas kann insbesondere auch eingesetzt werden, um sicherheitstechnische Auflagen zu erfüllen. Des Weiteren kann ein gezielter Inertgasstrom zugeführt werden, um flüchtige Bestandteile besser entfernen zu können (Schleppgas).

Das erfindungsgemäß eingesetzte Wasser (W) dient im erfindungsgemäßen Verfahren nur als Hilfsmittel zur Verbesserung der Aufnahme von Füllstoff (F) ins Polymer (O). Wasser (W) wird im Ausheiz- und Entgasungsschritt gemäß zweitem Schritt des erfindungsgemäßen Verfahrens wieder aus dem Produkt ganz oder teilweise entfernt und kann mit dem Prozessabgas weiter behandelt werden. Eine Rückführung in den Prozess ist nach entsprechender Aufbereitung möglich.

Bei den nach dem erfindungsgemäßen Verfahren hergestellten Organopolysiloxanzusammensetzungen (A) handelt es sich bevorzugt um höherviskose Siliconmassen mit einer bei 25°C gemessenen Viskosität von mindestens 100 Pa-s mit einem Rotationsviskometer im Oszillationsmodus bei einer Frequenz von 1Hz und einer Deformation von 0,1% bei 25°C, z. B. von der Fa. Anton Paar. Das erfindungsgemäße Verfahren eignet sich besonders zur Herstellung höherviskoser Organopolysiloxanzusammensetzungen (A) mit einer bei 25°C gemessenen Brabenderplastizität von 100 bis 1 000 daN·m, sowie höchstviskoser Organopolysiloxanzusammensetzungen (A) mit einer nach Mooney bestimmten Viskosität von 10 bis 200 Mooney-Einheiten (Mooney-Endwert, ML(1+4), großer Rotor, 23°C, DIN 53523).

Die nach dem erfindungsgemäßen Verfahren hergestellten Organopolysiloxanzusammensetzungen (A) haben einen Gehalt an Wasser von bevorzugt maximal 2000 ppm, besonder bevorzugt 100 ppm bis 1000 ppm.

Das erfindungsgemäße Verfahren eignet sich besonders zur Herstellung hochgefüllter, hochviskoser Organopolysiloxanzusammensetzungen (A), hochviskoser Siliconpasten und hochgefüllter Siliconmasterbatchen. Bei den hitzehärtbaren HTV-Organopolysiloxanzusammensetzungen (A1) kann es sich auch um Basismischungen handeln, die der Herstellung von vernetzungsfähigen HTV-Fertigmassen dienen.
Das erfindungsgemäße Verfahren hat den Vorteil, dass durch Zugabe von Wasser als Prozesshilfsmittel die Durchsätze bei der kontinuierlichen Produktion von Silikonmassen, insbesondere HTV, signifikant gesteigert werden können.

Das erfingsgemäße Verfahren hat den Vorteil, dass durch Zugabe von Wasser als Prozesshilfsmittel der Mischvorgang von Füllstoffen ins Polymer unter geringeren Drehmomentschwankungen abläuft und so der Prozess unter verbesserter Stabilität durchgeführt werden kann.

Des Weiteren hat das erfindungsgemäße Verfahren den Vorteil, dass die verbesserte Aufnahme von Füllstoff ins Polymer die Knetzeit im Knetaggregat verkürzt, wodurch der Durchsatz bei gleichbleibender Produktqualität erhöht werden kann. Im erfindungsgemäßen Verfahren sind bei dem ganz besonders bevorzugten mehrstufigen kontinuierlichen Verfahren Durchsatzsteigerungen um das 1,2- bis 2-fache fahrbar im Vergleich zu Verfahren ohne Wasserzugabe.

Das offenbarte Verfahren hat den Vorteil, dass bei diskontinuierlicher Verfahrensweise durch die Zugabe von Wasser in das Organopolysiloxan, insbesondere HTV-Festpolymer, die Aufnahme der Füllstoffe verbessert wird. Dadurch verkürzen sich die Zykluszeiten der Füllstoffdosierungen, was zu einer Reduzierung der Anlagenbelegzeiten führt.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 23°C (DIN 53523) bestimmt.

Allen das erfindungsgemäße Verfahren demonstrierenden Beispielen sowie Vergleichsbeispielen wurde eine Siliconkautschukmasse folgender Rohstoffe zugrunde gelegt:
Organopolysiloxan:
   HTV-Polymer, welches bei einer Temperatur von 25°C und einer Scherrate von 0,81 1/sec eine Viskosität von ca. 20000 Pa-s aufweist und gemäß des ¹H-NMR-Spektrums folgende zahlenmittlere Zusammensetzung besitzt:

   Vi-Si(Me)₂-[OSi(Me)₂]ₘ-[OSiMeVi]ₙ-OSi(Me)₂-Vi,

   wobei Me Methylrest und Vi Vinylrest bezeichnen, n+m ca. 6000 ist und m/n ca. 3000 beträgt;
Verarbeitungshilfsmittel:
   Verarbeitungshilfsmittel, welches gemäß des ²⁹Si-NMR-Spektrums folgende zahlenmittlere Zusammensetzung besitzt:

   HO-Si(Me)₂-[OSi(Me)₂]ₘ-OSi(Me)₂-OH,

   wobei m ca. 14 ist und die bei einer Temperatur von 25°C gemessene Viskosität 41 mm²/s beträgt;
Füllstoff:
   pyrogen erzeugte Kieselsäure erhältlich unter der Bezeichnung HDK® T30 bei der Wacker Chemie AG, D-München, mit einer nach BET gemessenen spezifischen Oberfläche von 300 m²/g; und
Wasser als Prozesshilfsmittel:
   destilliertes Wasser

### Beispiel 1

Für die 1. Stufe wurde eine Conterna® Knetkaskade von IKA Maschinenbau Janke & Kunkel GmbH & Co.KG, Staufen, eingesetzt. Die Knetkaskade wies 6 Kammern zu je 10 l Volumen auf.

In die Zuführung zur Kammer 1 wurde das Polymer über eine Zahnradpumpe eindosiert (172 kg/h), zudem das Verarbeitungshilfsmittel (19,5 kg/h) und Wasser (0,3 kg/h) (über zwei separate Dosierstellen in den Polymerstrom), in die Zuführung zur Kammer 2 der Füllstoff (69 kg/h). Der Gesamtdurchsatz betrug folglich ca. 260 kg/h.

Die Drehzahlen in den Kammern 1-4 lagen bei 35 UpM. In den Kammern 5 und 6 wurden mit 40 UpM nachgeknetet und gleichzeitig erfolgte aus Kammer 6 der Produktaustrag. Die 6 Kammern wurden nicht gekühlt und nicht geheizt, die Temperaturen zogen von ca. 45°C in der 1. Kammer auf ca. 150°C in der 6. Kammer an.
Der aus Kammer 6 ausgetragene Rohkautschuk wurde über ein Übergangsstück kontinuierlich (30kg/h) entnommen und über einen AZ-Feeder der Fa. Krauss Maffei, der als Förderorgan diente, kontinuierlich in einen 100l Sigma-Kneter mit Lampe, Vakuumanschluss, Schauglas und Austragsschnecke dosiert. Der Kneter wurde auf ca 200°C aufgeheizt und auf einen Unterdruck von ca 100mbar evakuiert, wobei Wasser aus dem Produkt entfernt wird. Nachdem der Kneter zur Hälfte gefüllt war, wurde kontinuierlich über die Austragsschnecke ausgetragen. Die Austragsmenge wurde so eingestellt, dass der Füllgrad des Kneters in etwa konstant blieb.

Es werden Siliconmassen mit einer Mooney-Viskosität von 45 und einem Wassergehalt von 600 ppm erhalten.

### Vergleichsbeispiel 1

Die in Beispiel 1 beschriebene Verfahrensweise wird wiederholt mit der Abänderung, dass kein Wasser eingesetzt wurde und die Massenströme bei einem Gesamtdurchsatz von 200kg/h wie folgt waren:
In die Zuführung zur Kammer 1 wurde das Polymer eindosiert (132 kg/h), zudem das Verarbeitungshilfsmittel (15 kg/h), in die Zuführung zur Kammer 2 der Füllstoff (53 kg/h).

Es werden Siliconmassen mit einer Mooney-Viskosität von 45 und einem Wassergehalt von ca. 600 ppm erhalten.

### Beispiel 2

Für die 1. Stufe wurde eine Conterna® Knetkaskade von IKA Maschinenbau Janke & Kunkel GmbH & Co.KG, Staufen eingesetzt. Die Knetkaskade wies 5 Kammern zu je 50 l Volumen auf.

In die Zuführung zur Kammer 1 wurde das Polymer kontinuierlich mit Hilfe einer Zahnradpumpe dosiert (728 kg/h). Die Dosierung erfolgte gravimetrisch mit Hilfe einer Differentialdosierwaage. In den Massestrom des Polymers wurden mittels einer Zahnradpumpe das Verarbeitungshilfsmittel (80 kg/h) und Wasser mittels einer Membranpumpe (1,5 kg/h) dosiert. Die Mengen wurden jeweils mittels Massedurchflussmesser überwacht. In die Zuführung zur Kammer 2 wurde der Füllstoff (292 kg/h) mit Hilfe einer Differentialdosierwaage über eine Einlaufschnecke zugeführt. Der Gesamtdurchsatz betrug folglich ca. 1100kg/h.

Die Drehzahlen in den Kammern 1-4 lagen bei 50 UpM. Die Kammer 5 dient dem Produktaustrag und wurde mit einer Drehzahl von 1,5 UpM betrieben. Die 5 Kammern wurden nicht gekühlt und nicht geheizt, die Temperaturen zogen von ca. 45°C in der 1. Kammer auf ca. 150°C in der 5. Kammer an.

Der aus Kammer 5 ausgetragene Rohkautschuk wurde kontinuierlich direkt über ein Übergangsstück in einen Pilgerschrittkneter der Firma "Buss Compounding Systems AG" vom Typ LR 300/19D zugeführt.
Der Kneter gliederte sich in 5 Zonen(Schüsse) mit folgendem Aufbau: 1. Zone 3D, 2. - 5. Zone jeweils 4D. Mit Hilfe einer Vakuum-Wasserringpumpe wurde ein Unterdruck in Höhe von 500 mbar(abs.) angelegt. Die Temperierung der einzelnen Schüsse und der Welle des Kneters wurden so gewählt, dass sich beginnend ab dem 2. Schuss bei einer Wellendrehzahl von 110 UpM eine Produkttemperatur längs des Kneters von 180 bis 200°C einstellte. Die über die Knetkaskade produzierte Rohmischung wurde in die Zone 1 des Pilgerschritt-Kneters mit einer Produkttemperatur von ca. 150°C dosiert. In den Zonen 2 - 5 wurde sie intensiv geknetet und dabei flüchtige Bestandteile und Wasser der Kautschukmassen entfernt. Über eine gekühlte Austragsschnecke wurde der Kautschuk ausgetragen.
Es werden Siliconmassen mit einer Mooney-Viskosität von 45 und einem Wassergehalt von ca. 600 ppm erhalten.

### Vergleichsbeispiel 2

Die in Beispiel 2 beschriebene Verfahrensweise wird wiederholt mit der Abänderung, dass kein Wasser eingesetzt wurde und die Massenströme bei einem Gesamtdurchsatz von 700kg/h wie folgt waren:
In die Zuführung zur Kammer 1 wurde das Polymer kontinuierlich dosiert (464 kg/h), zudem das Verarbeitungshilfsmittel (51 kg/h) in den Polymerstrom, in die Zuführung zur Kammer 2 der Füllstoff (185 kg/h).

Die Beispiele zeigen, dass durch den Zusatz von Wasser der Durchsatz erheblich gesteigert werden kann. An der Zielmasse durchgeführte Messungen zeigen den identischen Gehalt an Feuchtigkeit, unabhängig vom Wasserzusatz.

### Beispiel 3

Der Einsatz von Wasser zur Verbesserung der Aufnahme von Füllstoff in das Gemisch aus Organopolysiloxan und Verarbeitungshilfsmittel kann auch in diskontinuierlichen Verfahren erfolgen.

### A: Beispiel ohne Wasser als Vergleich:

In einem Chargenkneter (Doppelmuldenkneter mit Austraggschnecke, Trogvolumen: ca. 5m³) wurden unter Stickstoffatmossphäre und einem Sauerstoffgehalt von kleiner als 5 Vol% 1060 kg Organopolysiloxan, 116 kg Verarbeitungshilfsmittel bei 50°C vorgelegt und 5 Minuten gemischt. Danach wurden 424 kg der Füllstoff in 8 Portionen zugegeben. Nach jeder Portion an Füllstoff wurde eine Wartezeit von 2 Minuten eingehalten, während der Füllstoff in das Gemisch aus Organopolysiloxan und Verarbeitungshilfsmittel eingeknetet wurde. Nach vollständiger Dosierung von Füllstoff wurde die Mischung noch 2h bei 150°C ausgeheizt.

### B: Beispiel mit Wasser erfindungsgemäß:

In einem Chargenkneter (Doppelmuldenkneter mit Austraggschnecke, Trogvolumen ca. 5 m³) wurden 1060 kg Organopolysiloxan, 116 kg Verarbeitungshilfsmittel und 2,0 kg Wasser bei 50°C vorgelegt und 5 Minuten gemischt. Danach wurden 424 kg Füllstoff kontinuierlich aus einem Vorlagebhälter zugegeben. Der Füllstoff muss nicht portionsweise zugegeben werden, die Wartezeiten zum Einkneten entfallen. Nach vollständiger Dosierung von Füllstoff wird die Mischung noch 2h bei 150°C ausgeheizt.

## Patentansprüche

1. Verfahren zur kontinuierlichen Herstellung von Organopolysiloxanzusammensetzungen (A), bei dem Organopolysiloxane (O), Verarbeitungshilfsmittel (S) und Füllstoffe (F) in Anwesenheit von Wasser (W) zu Rohmischungen vermischt und geknetet werden, wobei die Zugabe von Wasser (W) zu Organopolysiloxan (O), Verarbeitungshilfsmittel (S) sowie gegebenenfalls Additiven (Z) vor dem Vermischen mit Füllstoff (F) erfolgt, mit der Maßgabe, dass Wasser (W) in den kontinuierlichen Polymerstrom, enthaltend Komponente (O), Komponente (S) und gegebenenfalls Komponente (Z), dosiert wird, sowie anschließend die Rohmischungen in einem Ausheiz- und Entgasungsschritt bei Temperaturen im Bereich von 100°C bis 250°C entgast und von Wasser (W) befreit werden, wobei es sich bei den Organopolysiloxanen (O) um solche enthaltend Einheiten der Formel
R¹ₐR²_{b}R³_{g}SiO_{(4 -a-b-g)/2} (1)
handelt, wobei
R¹ gleich oder verschieden sein kann und einwertige, SiCgebundene, gegebenenfalls halogen- oder cyanosubstituierte, aliphatische Kohlenstoff-Kohlenstoff-Mehrfachbindung aufweisende Kohlenwasserstoffreste darstellt,
R² gleich oder verschieden sein kann und einwertige, SiCgebundene, gegebenenfalls halogen- oder cyanosubstituierte, von aliphatischen Kohlenstoff-Kohlenstoff-Mehrfachbindungen freie Kohlenwasserstoffreste darstellt,
R³ gleiche oder verschiedene einwertige Si-gebundene Reste darstellen, ausgewählt aus -H, -OH und -OR, wobei R ein einwertiger Kohlenwasserstoffrest ist, der durch Sauerstoffatome unterbrochen sein kann,
a 0, 1, 2 oder 3 ist,
b 0, 1, 2 oder 3 ist und
g 0, 1, 2 oder 3 ist,
mit der Maßgabe, dass die Summe a+b+g kleiner als oder gleich 3 ist und Siloxane (O) mindestens 30 Einheiten der Formel (1) aufweisen, mit der Maßgabe, dass als Mischaggregate Doppelmuldenkneter mit Austragsschnecke oder oszillierende Einwellenpilgerschrittkneter, jeweils gegebenenfalls mit vorgeschalteter Kneterkaskade, verwendet werden.

2. Verfahren nach Anspruch 1, **dadurch gekennzeichnet, dass** es sich bei den Füllstoffen (F) um verstärkende Füllstoffe handelt.

3. Verfahren nach einem oder mehreren der Ansprüche 1 bis 2, **dadurch gekennzeichnet, dass** es sich bei dem Verarbeitungshilfsmittel (S) um Organopolysiloxane mit 2 bis 25 Siloxaneinheiten handelt.

4. Verfahren nach einem oder mehreren der Ansprüche 1 bis 3, **dadurch gekennzeichnet, dass** Wasser (W) in Mengen von 0,1 bis 20 Gew.-%, bezogen auf das Gesamtgewicht an Füllstoff (F) eingesetzt wird.

5. Verfahren nach einem oder mehreren der Ansprüche 1 bis 4, **dadurch gekennzeichnet, dass** Organopolysiloxane (O), Füllstoffe (F), Verarbeitungshilfsmittel (S) und gegebenenfalls weitere Komponenten in Anwesenheit von Wasser (W) in einem oszillierenden Einwellenpilgerschrittkneter in einer ersten Stufe intensiv vermischt und geknetet werden und diese Rohmischungen in einer zweiten Verfahrensstufe bei Temperaturen im Bereich von 100°C bis 250°C entgast und von Wasser (W) befreit werden.

## Claims

1. Process for continuously producing organopolysiloxane compositions (A), wherein organopolysiloxanes (O), processing aids (S) and fillers (F) are mixed and kneaded in the presence of water (W) to give raw mixtures, where the addition of water (W) to organopolysiloxane (O), processing aid (S) and optionally additives (Z) is carried out before mixing with filler (F), with the proviso that water (W) is metered into the continuous polymer stream containing component (O), component (S) and optionally component (Z), and the raw mixtures are subsequently devolatilized and freed of water (W) in a heating and devolatilizing step at temperatures in the range from 100°C to 250°C, where the organopolysiloxanes (O) are organopolysiloxanes containing units of the formula
R¹ₐR²_{b}R³_{g}SiO_{(4-a-b-g)/2} (1),
where
the radicals R¹ can be identical or different and are monovalent, SiC-bonded, optionally halogen- or cyano-substituted hydrocarbon radicals having an aliphatic carbon-carbon multiple bond,
the radicals R² can be identical or different and are monovalent, SiC-bonded, optionally halogen- or cyano-substituted hydrocarbon radicals which are free of aliphatic carbon-carbon multiple bonds,
the radicals R³ are identical or different monovalent Si-bonded radicals selected from among -H, -OH and -OR, where R is a monovalent hydrocarbon radical which can be interrupted by oxygen atoms,
a is 0, 1, 2 or 3,
b is 0, 1, 2 or 3, and
g is 0, 1, 2 or 3,
with the proviso that the sum a+b+g is less than or equal to 3 and siloxanes (O) have at least 30 units of the formula (1), with the proviso that double trough kneaders with discharge screw or oscillating single-screw reciprocating kneaders, each optionally with preceding kneader cascade, are used as mixing apparatuses.

2. Process according to Claim 1, **characterized in that** the fillers (F) are reinforcing fillers.

3. Process according to one or more of Claims 1 to 2, **characterized in that** the processing aid (S) comprises organopolysiloxanes having from 2 to 25 siloxane units.

4. Process according to one or more of Claims 1 to 3, **characterized in that** water (W) is used in amounts of from 0.1 to 20% by weight, based on the total weight of filler (F).

5. Process according to one or more of Claims 1 to 4, **characterized in that** organopolysiloxanes (O), fillers (F), processing aids (S) and optionally further components are intensively mixed and kneaded in the presence of water (W) in an oscillating single-screw reciprocating kneader in a first stage and these raw mixtures are devolatilized and freed of water (W) in a second process stage at temperatures in the range from 100°C to 250°C.

## Revendications

1. Procédé de fabrication continue de compositions d'organopolysiloxane (A), selon lequel des organopolysiloxanes (O), des adjuvants d'usinage (S) et des charges (F) sont mélangés et malaxés en présence d'eau (W) pour former des mélanges bruts, l'ajout d'eau (W) aux organopolysiloxanes (O), aux adjuvants d'usinage (S) et éventuellement à des additifs (Z) ayant lieu avant le mélange avec les charges (F), à condition que l'eau (W) soit ajoutée dans le courant de polymère continu, contenant le composant (O), le composant (S) et éventuellement le composant (Z), puis les mélanges bruts sont dégazés et libérés de l'eau (W) lors d'une étape de chauffage et de dégazage à des températures dans la plage allant de 100 °C à 250 °C, les organopolysiloxanes (O) consistant en des organopolysiloxanes contenant des unités de la formule :
R¹ₐR²_{b}R³_{g}SiO_{(4-a-b-g)/2} (1)
dans laquelle
les R¹ peuvent être identiques ou différents, et représentent des radicaux hydrocarbonés monovalents, reliés à SiC, éventuellement à substitution halogène ou cyano, comprenant une liaison multiple carbone-carbone aliphatique,
les R² peuvent être identiques ou différents, et représentent des radicaux hydrocarbonés monovalents, reliés à SiC, éventuellement à substitution halogène ou cyano, sans liaison multiple carbone-carbone aliphatique,
les R³ représentent des radicaux monovalents reliés à Si identiques ou différents, choisis parmi -H, -OH et - OR, R étant un radical hydrocarboné monovalent qui peut être interrompu par des atomes d'oxygène,
a représente 0, 1, 2 ou 3,
b représente 0, 1, 2 ou 3, et
g représente 0, 1, 2 ou 3,
à condition que la somme a+b+g soit inférieure ou égale à 3, et que les siloxanes (O) comprennent au moins 30 unités de la formule (1), à condition que des malaxeurs à double cuve munis d'une vis de déchargement ou des malaxeurs monovis oscillants à pas de pèlerin, chacun éventuellement munis d'une cascade de malaxeurs en amont, soient utilisés en tant qu'appareils de mélange.

2. Procédé selon la revendication 1, **caractérisé en ce que** les charges (F) consistent en des charges renforçantes.

3. Procédé selon une ou plusieurs des revendications 1 à 2, **caractérisé en ce que** les adjuvants d'usinage (S) consistent en des organopolysiloxanes contenant 2 à 25 unités siloxane.

4. Procédé selon une ou plusieurs des revendications 1 à 3, **caractérisé en ce que** l'eau (W) est utilisée en quantités de 0,1 à 20 % en poids, par rapport au poids total des charges (F).

5. Procédé selon une ou plusieurs des revendications 1 à 4, **caractérisé en ce que** des organopolysiloxanes (O), des charges (F), des adjuvants d'usinage (S) et éventuellement des composants supplémentaires sont mélangés intensivement et malaxés lors d'une première étape en présence d'eau (W) dans un malaxeur monovis oscillant à pas de pèlerin, et ces mélanges bruts sont dégazés et débarrassés de l'eau (W) lors d'une deuxième étape de procédé à des températures dans la plage allant de 100 °C à 250 °C.
